## Europäisches Patentamt
## European Patent Office
## Office européen des brevets

(11) Publication number: **0 230 115**
**B1**

(12) # EUROPEAN PATENT SPECIFICATION

(45) Date of publication of patent specification: **24.10.90**

(51) Int. Cl.⁵: **B 32 B 27/32, C 08 L 23/10**
**C 08 L 23/16**

(21) Application number: **86309312.6**

(22) Date of filing: **28.11.86**

(60) Divisional application **90104603.7 filed on 28/11/86.**

(54) Polymeric compositions and films, plural layer sheet structures and packaging made from such films and structures.

(30) Priority: **29.11.85 US 802910**

(43) Date of publication of application:
**29.07.87 Bulletin 87/31**

(45) Publication of the grant of the patent:
**24.10.90 Bulletin 90/43**

(84) Designated Contracting States:
**AT BE CH DE ES FR GB GR IT LI LU NL SE**

(56) References cited:
**EP-A-0 229 475**
**EP-A-02 301 14**
**FR-A-2 415 056**
**GB-A-2 055 688**

(73) Proprietor: **AMERICAN NATIONAL CAN COMPANY**
**8770 West Bryn Mawr Avenue**
**Chicago, Illinois 60631 (US)**

(72) Inventor: **Genske, Roger Peter**
**971 Nenning Road**
**Neenah Wisconsin 54956 (US)**
Inventor: **Kimm, Yong Joo**
**1261 Meadow Lane**
**Neenah Wisconsin 54956 (US)**

(74) Representative: **Holdcroft, James Gerald, Dr. et al**
**Graham Watt & Co., Riverhead**
**Sevenoaks, Kent TN13 2BN (GB)**

Courier Press, Leamington Spa, England.

## Description

The present invention relates to polymeric compositions and films, plural layer sheet structures and packaging made from such films and structures.

The packaging industry makes and uses many sheet structures in the making of packages such as heat sealed packages. Such packages find use in a multiplicity of applications. Of particular interest herein are those applications where the finished package may be subjected to relatively abusive physical shocks, for example by being dropped or bumped. In cases where the package contains fluid components, the shock may be transferred to all parts of the package by the contained fluid. The transferred shock can be effective to cause failure of the package at its weakest point, when the severity of shock is sufficiently great, even though the initial shock is not exerted at the weakest point.

Heat sealed packages tend to fail at or close to a heat seal. Typical failures occur in the seal area by partial peeling of the facing sealant layers from each other. Where the shock is severe enough, the package may have a catastrophic failure wherein the package may be penetrated to the outside.

Such failure of the package, whether by partial peeling or by catastrophic failure, compromises the containment and protective functions of the package, and is thus not acceptable. It is desirable to find material compositions which may be used in packaging sheet structures to enhance the capability of the sheet structure, and particularly the sealant layer, to withstand increased amounts of shock-type abuse.

In certain packaging applications, the packages are subjected to heat treatment at elevated temperatures of up to about 121°C (250°F) as part of the packaging process. Such heat treatments are common in certain packaging of medical supplies and shelf stable foods.

Some polymers, such as polypropylene, which are otherwise excellent for use in high temperature applications, tend to be embrittled after being subjected to such heat treatments. Increasing brittleness leads to a reduced ability to resist shock type abuse. While the use of such materials is desirable for their ability to withstand heat treatment without failure of the package during the heat treatment, the resulting brittleness is an undesirable feature as it affects its ability to withstand the shocks of, for example, shipping and handling.

It is an object of this invention to provide novel material blend compositions, single layer films and plural layer films and sheet structures, incorporating the novel compositions, for use in making packages, and particularly heat sealed packages.

It is desired, also, to provide heat sealed packages capable of withstanding increased amounts of physical shock type abuse, especially after the closed and sealed package has been subjected to elevated temperatures of up to 121°C (250°F).

GB—A—2,055,688 is concerned with packaging materials having, inter alia, improved heat sealability. Packaging film in accordance with GB—A—2,055,688 comprises a propylene polymer base film coated with a blend of (A) a copolymer of propylene and ethylene—propylene predominating (B) a copolymer of propylene and an α-olefin having 4—10 carbon atoms—propylene predominating and (C) a copolymer of butene and an α-olefin having from 2—10 carbon atoms-—butene predominating. The coating formulation can comprising (A), (B) and (C) together or a combination of any two of (A), (B) and (C).

Differing from GB—A—2,055,688 according to the present invention, there is provided a polymeric film comprising a blend of:

(a) 40 to 70% by weight of a first component comprising a polypropylene polymer;

(b) a second component comprising an ethylene-based copolymer of ethylene and a second moiety comprising either propylene or butene-1; and

(c) a third component, different from the second component, which provides elastomeric properties.

Our E.P. Application No. 86309313.4, publication No. EP—A—0 229 475 was filed in the EPO on the same day as the present application and claims the same priority date.

E.P. Application No. 86309313.4 claims, in claim 1:

A multiple layer film including first and second layers adhered one to the other, the first layer being a blend of (i) a polypropylene (ii) an ethylene-based copolymer and a Modifier, and the second layer being a blend including a Modifier, characterised in that the second layer is a blend of polyethylene and a Modifier and in that the Modifier of the first layer has a composition different from the ethylene based copolymer (EBC).

The Modifier in the first layer may be an elastomer.

According to claim 2 of that co-pending application, the first component is present in an amount of 40—70% by weight of the first layer, and according to claim 3 the second component in that layer consists of ethylene copolymerised with propylene or butene-1.

It will be observed that in the film the subject of these claims of the co-pending application, the second layer is a blend of polyethylene and a Modifier.

The present application, insofar as it claims multiple layer films, expressly disclaims such films wherein the second layers thereof comprise blends of polyethylene and Modifier, and the present invention therefore provides a multiple layer sheet structure comprising:

(a) a first layer (12) the composition of which includes (i) 40 to 70% by weight of a first component comprising a polypropylene polymer, (ii) a second component comprising an ethylene-based copolymer of ethylene and a second moiety comprising either propylene or butene-1; and (iii) a third component different from the second component which provides elastomeric properties; and

(b) a second layer (14) adhered to the first layer (12), the second layer not being a blend of polyethylene and a Modifier.

In the above-defined novel blend composition, film and sheet structure, the second component is an ethylene-based copolymer (hereinafter sometimes referred to as "EBC") which consists of ethylene copolymerized with moieties of a second molecule, the latter being either propylene or butene-1. The EBC is ethylene-predominant. The aforesaid third component is an elastomeric polymer which may be an elastomeric EBC. (Hereinafter, the aforesaid third component group of materials is sometimes referred to as the "third component").

Preferably, the second component is present in an amount of 5% to 35% by weight of the overall composition of the blend of which it forms a part.

In one preferred embodiment, the ethylene-based copolymer is a copolymer of 85 to 95 mole % ethylene and 15 to 5 mole % butene-1. In another embodiment, it is a copolymer of 81—94 mole % ethylene and 19—6 mole % of butene-1.

In another preferred embodiment, the ethylene-based copolymer is essentially a copolymer of 60 to 80 mole % ethylene and 40 to 20 mole % propylene.

It is preferred that the composition of the third component be selected from the group of elastomers comprising polybutylene, polyisobutylene, ethylene propylene diene-monomer terpolymer, styrene butadiene styrene block copolymer, styrene-ethylene/butylene-styrene block copolymer, polybutene-1, styrene isoprene styrene block copolymer, isobutylene isoprene copolymer, or from the ethylene-based copolymers group.

In one family of preferred compositions, therefore, the first component is present in an amount of 40% to 70% by weight, the second component is present in an amount of 5% to 35% by weight, and the third component is present in an amount of 10% to 40% by weight. In that family of overall compositions, the composition of the third component is most desirably selected from the styrene butadiene styrene block copolymer, styrene-ethylene/butylene-styrene block copolymer, styrene isoprene styrene block copolymer, and polyisobutylene.

The aforesaid composition forms the basis of single layer films, plural layer films and multiple layer sheet structures embodying the invention.

In one multiple layer sheet structure according to the invention, a first layer is made of metal foil having two opposing surfaces on opposing sides thereof, a second layer of an abuse resistant polymer is adhered to one of the foil surfaces, and a third layer adhered to the sheet structure on the other of the foil surfaces, the composition of the third layer being a blend composition according to the invention as defined hereinbefore.

In another multiple layer sheet structure according to the invention, a first layer is made of a polyamide having two opposing surfaces on opposing sides thereof, a second layer of an ethylene vinyl alcohol copolymer having two opposing surfaces is disposed with one surface of the second layer on one surface of the first layer, a third layer of a polyamide is disposed on the other surface of the second layer opposite the first layer, and a fourth layer is adhered to the sheet structure on the other side of the first layer, the fourth layer being a blend composition according to the invention.

In yet another multiple layer sheet structure of the invention, a first layer is made of a barrier material having two opposing surfaces on opposing sides thereof, the composition of the first layer being a vinylidene chloride copolymer, a second layer made of an abuse resistant polymer is adhered to one surface of the first layer, and a third layer is adhered, in the sheet structure on the other side of the first layer, the composition of the third layer being a blend composition according to the invention.

Packages of various types such as pouches or sachets, which may or may not be heat sealed, may also be made of the films and sheet structures according to the invention. The invention comprehends these packages when ready for filling and after filling and closing.

Embodiments of the invention will now be explained in more detail in the following description, which is given by way of example only and with reference to the accompanying drawings, in which:

Figure 1 is a cross-section of a portion of a 2-layer film according to the invention,

Figure 2 is a cross-section of a portion of a 3-layer sheet structure according to the invention, wherein a layer of a metal foil is incorporated as a barrier layer,

Figure 3 is a cross-section of a portion of a 4-layer film according to the invention,

Figure 4 is a cross-section of a portion of another 3-layer film according to the invention, wherein a polymeric barrier material is incorporated as an internal layer, and

Figure 5 is a perspective view of a typical pouch made in accordance with the invention.

The invention encompasses a plurality of forms and embodiments. In its most generic form, the invention lies in a composition of matter formed by the intimate blending together of several blend components. The invention may also be represented by a variety of articles which can be formed such as by molding or extruding the blend composition. One preferred form of article so fabricated is a single layer packaging film which may be formed by conventional extrusion processes. Such films are typically thin and flexible, being of the order of 0.025 to 0.20 mm (1 mil to 8 mils) thick. Thicker sections and shapes may also be formed, as for other uses.

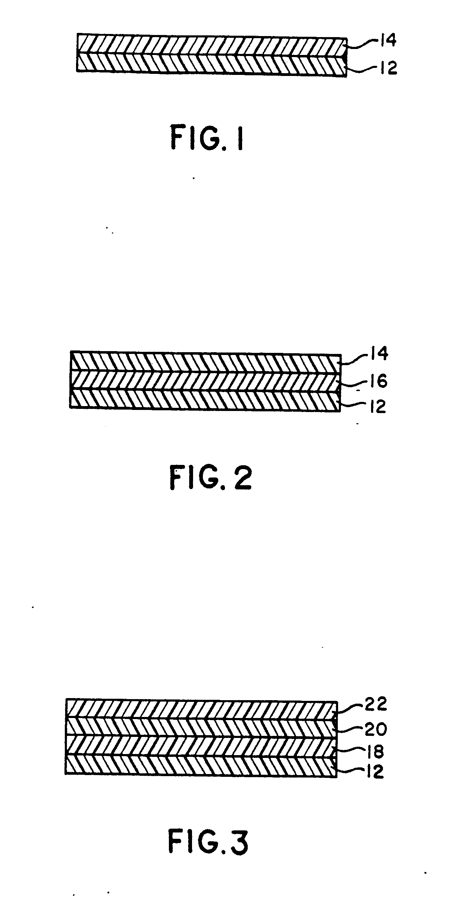

Other preferred embodiments of the invention are those where the blend composition is used to form one layer of a plural or multiple layer sheet structure. Representative of these films are those illustrated in Figures 1—4. Sheet structures according to the invention have two, three, four or more than four, e.g. five, separate layers adhered one to another, using further intervening layers of adhesive as necessary.

Turning now to Figure 1, layer 12 is a layer of a novel blend composition according to the invention and layer 14 is formed of an abuse resistant polymer, such as polypropylene. A single layer film according to the invention will have a composition equivalent to the said layer 12.

The structure of Figure 1 illustrates a simpler form of packages of the invention. It is advantageous in its simplicity, and may find use in applications where high levels of protection from gaseous infusion are of paramount importance.

Where protection from gaseous infusion is more important, a layer of a barrier material is used. In the three layer structure of Figure 2, the additional layer 16 is a layer of metal foil, which provides an excellent barrier to gaseous infusion. Layer 14 is the layer of an abuse resistant polymer and layer 12 is the blend composition layer as in Figure 1.

The structure of Figure 2 is representative of a sheet structure useful in making retortable pouches. Such structures may also be used for applications where the package is not subjected to retort conditions. In those cases, the specific materials selected for each layer need not be evaluated in terms of their ability to withstand the retorting process. Typical problems encountered in retort processing are excessive softening during the processing, or embrittlement resulting from the processing. The foil layer 16 of such a retortable package is 0.007—0.025 mm (28 to 100 gauge), with the thinner gauges being preferred for economic reasons. The abuse resistant layer 14 may be any of the conventionally known abuse resistant polymers. These include, for example, nylon, oriented nylon, oriented polypropylene, and oriented polyester. For use in retort packaging, layer 14 is 0.013 mm (50 gauge), with a range of 0.006—0.025 mm (25 to 100 gauge). It is conventionally known to achieve adhesion between the foil layer 16 and abuse resistant layer 14 by means of adhesives such as polyester urethane curing type adhesives. These adhesives are acceptable for such use herein.

The blend layer 12 may be any of the blend compositions according to the invention. The Figure 2 structure is designed such that layer 12 may be used as a heat seal layer. A minimum thickness for achieving strong heat seals is 0.025 mm (1 mil), so that is a preferred minimum thickness. Thicker heat seal layers may advantageously provide more efficient use in heat seal material, up to 0.10 mm (4 mils); and that is a generally preferred maximum thickness. While layer 12 may be much thicker, for example 0.20 mm (8 mils) or more, and same is encompassed by the scope of the invention, no material benefit is usually derived from the use of the additional material; so the greater thicknesses are not generally preferred.

Layer 12 may be adhered to layer 16 by a conventional polyester urethane curing type adhesive. Alternately, adhesion may be achieved by other methods such as by extrusion lamination, coextrusion lamination, or extrusion coating followed by heat and pressure at a hot nip. In some instances, it may be desirable to use a primer on the surface of foil layer 16 before adhering layers 12 and 16 to each other.

Turning next to Figure 3, layer 12 is a blend composition according to the invention as in Figures 1 and 2. Layer 18 is a polyamide. Layer 20 is an ethylene vinyl alcohol copolymer. Layer 22 is a polyamide.

The structure of Figure 3 represents generically a family of sheet structures which provide an effective barrier to transmission of oxygen through the sheet structure while affording transparency of the packaging material for visibility of the packaged contents. These packages have a variety of uses, and the selection of specific polymers and combinations of polymers depends on the particular use contemplated. A typical use is, as for the structure of Figure 2, that of retort packaging.

It is known to coextrude a multiple layer film structure wherein a layer of ethylene vinyl alcohol copolymer is between two layers of polyamide. Such a structure is seen in the substructure of layers 18, 20 and 22. It has further been found acceptable to include layer 12 as part of the coextrusion. Thus, the structure of Figure 3 may be advantageously and economically produced in a single processing step by coextruding all four layers simultaneously and combining them in the coextrusion process to form the multiple layer sheet structure.

For enhanced adhesion between layers 12 and 18, it is sometimes desirable to include an adhesive, such as an adhesive polymer, between layers 12 and 18. Such materials are conventionally known and may be selected based on the specific compositions of layers 12 and 18 and the process to be used. Typical of these adhesive polymers are those based on polypropylene and having carboxyl modifications thereto, such as maleic acid or maleic anhydride.

The structure may, of course, be made by other processes but they generally will be more expensive, and thus those processes are less preferred. Illustrative of these is adhesive lamination wherein the layers may be joined by using, for example, polyester urethane curing type adhesive.

The term polyamide, as used in describing the compositions of layers 18 and 22 is intended to include copolymers and alloys of polyamide as a major component. Likewise, additives which are normally used with polyamide are acceptable herein and are thus included in the compositions of layers 18 and 22. While the compositions of layers 18 and 22 are usually the same, to facilitate coextrusion of the sheet material, they may be different and the process may be adapted accordingly.

The term ethylene vinyl alcohol copolymer as used in describing the composition of layer 20, is intended to include the copolymer alone and blends of ethylene vinyl alcohol with other polymers. Likewise, additives which are normally used with ethylene vinyl alcohol copolymer are acceptable herein and are thus included in the composition of layer 20.

The term "elastomeric" includes polymers, copolymers or rubbers which at room temperature can be stretched substantially under low stress and, upon immediate release of the stress, have the tendency to return generally to the original shape.

The blend layer 12 may be any of the blend compositions embodying the invention. The Figure 3 structure, as in Figures 1 and 2, is designed such that layer 12 may be used as a heat seal layer. A minimum thickness for achieving strong heat seals is likewise 0.025 mm (1 mil) in this structure; so that is a preferred minimum thickness. Thicker heat seal layers may advantageously provide more efficient use of the heat seal material, up to 0.10 mm (4 mils); so that is a generally preferred maximum thickness. Layer 12 may also be thicker, as described for the corresponding layer 12 in Figure 2.

Layer 12 may also be less than 0.025 mm (1 mil) thick as, for example, in all the illustrated embodiments, where heat seals are not used or seal strength is not critical.

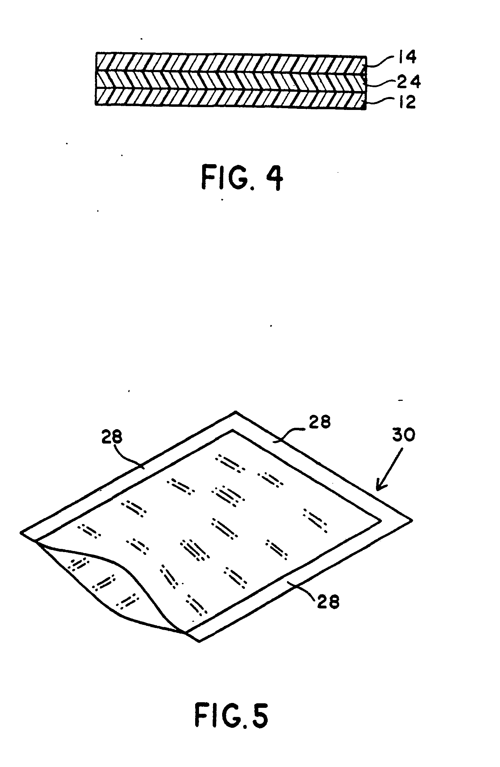

Turning now to Figure 4, layer 14 is an abuse resistant layer as in Figure 2. Layer 12 is of a blend composition according to the invention as in Figures 1—3. Layer 24 is an oxygen barrier layer such as a vinylidene chloride copolymer. Preferred copolymers are vinylidene chloride-vinyl chloride copolymer and vinylidene chloride-methyl-acrylate copolymer. In the Figure 4 structure, layer 24 usually has a thickness of 0.008 to 0.051 mm (0.3 to 2.0 mil), depending primarily on the rate of oxygen transmission which is desired for any given end use. While adhesion may be achieved by other means, suitable adhesives, such as the polyester urethane curing adhesives, are usually economically used between the respective layers 12, 24, and 14 to achieve good adhesion between the layers.

For constructing the sheet structure of Figure 4, layers 12, 24 and 14 are usually formed separately from each other and then combined into the multiple layer structure shown, by conventional techniques for combining polymer films. In a typical process, the layers are joined by conventional adhesive lamination techniques.

As is now evident from the plurality of the multiple layer structures illustrated above, the blend composition of polypropylene and the second and third components has useful advantage in a variety of multiple layer structures. Indeed a layer of the blend composition may advantageously be used in combination with any other layer which may be adhered to it. Thus the multiple layer embodiment of the invention may be generically defined as a multiple layer sheet material wherein the composition of at least one layer is comprised of a blend of polypropylene and the second and third components; and wherein the composition of the other layer or layers need not necessarily be restricted except for purposes of obtaining interlayer adhesion acceptable to the intended use. Thus non-polymeric materials, such as paper and metal foil may be used, as well as polymeric materials.

The multiple layer sheet structures of the invention are advantageously formed into packages using heat seals, as illustrated in Figure 5. Typically, portions of the sheet material are brought into face-to-face relationship, with the layer 12 on one portion facing the layer 12 of the opposing sheet portion. Heat seals 28 are then formed between the sheet portions about a common periphery to form a container 30 that generally defines an enclosed area. Usually, one side of the thus formed package is left open, as shown, for insertion of the product. Finally, the filled package is closed and sealed by a heat seal along the open side.

Alternately, the sheet may be formed into a tube by forming a longitudinal seal along overlapping edges; and a transverse seal is formed across the width of the tube; all as described, for example, in US—A—4,521,437. This process is particularly suitable for use in vertical form, fill and seal machines.

In overcoming the primary problem of brittleness of the polypropylene in flexible packages, as addressed herein, a number of factors work together in combination. Important to achievement of the objectives of the invention is incorporation, into the blend composition, of the second component and third components as hereinbefore described. The combined contribution of the second and third components is evidenced by substantially fewer structural failures in the films, sheet structures, and packages made therefrom.

The ethylene-based copolymer of the second component is a copolymer of two moieties, both moieties being present in the main chain of the polymer. The overall mole ratio is at least 60 to at most 95 mole % ethylene. The ethylene is copolymerized with propylene or butene-1. In the case of propylene, the mole ratio is most preferably within the range of 20% to 40% propylene and 80% to 60% ethylene. One such material is sold by Mitsui Petrochemical Industries, Ltd. as TAFMER® P. In the case of butene-1, the mole ratio is most preferably within the range of 85% to 95% ethylene, and 15% to 5% butene-1. One such material is sold by Mitsui Petrochemical Industries, Ltd. as TAFMER® A.

The polymer used as the third component is different from the second component and may be any of the known and readily available elastomeric polymers or an EBC, indeed even blends thereof. Examples of readily available elastomeric polymers are polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

The third component can be an ethylene based copolymer which is not, however, the same as the second component, as such would effectively make a two-component blend, rather than a three component blend as defined in the appended claims.

The polypropylene which is used as the first component of the blend provides strength to the sheet structure as well as the capability to withstand high temperature without excessive softening. The inclusion of the second and third components in the blend composition provides resilience to the blend composition.

Any of the polypropylenes may be used in the first component of the blend. Polypropylenes which are copolymers having 2 to 8 mole percent ethylene are preferred, as the copolymer provides some minimum level of additional resilience to the polypropylene, as compared to a homopolymer. The term "polypropylene" as used herein is intended to include homopolymers and copolymers except where specified otherwise. Whether the polypropylene is a homopolymer or copolymer, its resilience as demonstrated herein, whether having been retort processed, or not retort processed, is enhanced substantially by the incorporation of the second and third components. Without the incorporation of the second and third components, the polypropylene is at least somewhat rigid, whether it is a homopolymer or copolymer.

For example, a blend of 60% by weight of the polypropylene and 40% polyisobutylene is superior to the same polypropylene when tested in unblended composition, as measured in free fall drop tests of packages made therefrom. But these packages with polyisobutylene will fail, at a 2.74 m (9 foot) drop with the failure being by rupture through the package wall adjacent a heat seal.

By comparison, packages were made using single-layer film whose compositions was 60% by weight of the same polypropylene copolymer, but comprising 20% TAFMER® A and 20% polyisobutylene instead of simply 40% polyisobutylene of the above example. The resulting packages passed the 2.74 m (9 foot) drop tests, unlike packages made from either of the 2-component blends.

While polypropylene homopolymer is fully satisfactory for many uses, the polypropylene copolymer is preferred, as it evidences the optimum properties of improved resistance to shock abuse in combination with the capability to withstand elevated processing temperatures. Optimum performance is generally seen, then, in blends of polypropylene copolymer with the second and third components.

A lower level of 40% is generally preferred for the polypropylene in order to maintain at least a minimal degree of the high heat temperature tolerance of the composition, and a significant moisture vapor barrier property which are provided by polypropylene. An upper level of 70% is generally desired.

While the incorporation of virtually any amount of the second component into the blend composition will provide some benefit, generally, improvements are first evident at a level of 2% by weight. The most desired balance of properties is achieved when the second component is present in an amount of 5% to 35%.

Likewise, while the incorporation of virtually any amount of the third component into the blend composition will provide some benefit, generally improvements are first evident at a level of 2% by weight. The most desired balance of properties is achieved when the third component is present in an amount of 10% to 40%.

The inter-relationship among the three components is a mystery, in that the use of the second and third components as defined herein may provide a blend having superior properties as compared to the prior art. For whatever unexplained reason, the most preferred family of compositions of the invention is that where each of the components is within its preferred range of compositions; namely 40% to 70% polypropylene, 5% to 35% of the second component, and 10% to 40% of the third component.

Thus it is seen that the invention provides novel material blend compositions. The invention further provides single layer films and multiple layer films an sheet structures for use in making packages. Indeed, the invention provides heat sealed packages capable of withstanding substantial amounts of physical shock type abuse, which capability is especially noticeable after the closed and sealed packages have been subjected to elevated temperatures of up to 121°C (250°F).

**Claims for the Contracting States: BE, CH, DE, FR, GB, GR, IT, LI, LU, NL, SE**

1. A polymeric film comprising a blend of:
(a) 40 to 70% by weight of a first component comprising a polypropylene polymer;
(b) a second component comprising an ethylene-based copolymer of ethylene and a second moiety comprising either propylene or butene-1; and
(c) a third component, different from the second component, which provides elastomeric properties.

2. A film according to claim 1 respectively, wherein said second component is present in an amount of 5% to 35% by weight of the overall composition of said blend.

3. A film according to claims 1 or claim 2, wherein the second component consists of a copolymer of 85 to 95 mole % ethylene and 15 to 5 mole % butene-1.

4. A film according to claim 1 or claim 2, wherein the second component consists of a copolymer of 60 to 80 mole % ethylene and 40 to 20 mole % propylene.

5. A film according to any of claims 1 to 4, wherein the third component is present in an amount of 10% to 40% by weight of the overall composition of said blend.

6. A film according to any of claims 1 to 5, wherein the composition of the third component is selected from ethylene based copolymers, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

7. A film according to any of the preceding claims, wherein the second component is present in an amount of 5% to 35% by weight of the overall composition of the blend, the third component is present in an amount of 10% to 40% by weight of the overall composition of the blend, and wherein the composition of said third component is selected from styrene butadiene styrene block copolymer, styrene-ethylene/butylene-styrene block copolymer, styrene isoprene styrene block copolymer and polyisobutylene.

8. A film according to any of the preceding claims, wherein the second component is present in an amount of 5% to 35% by weight of the overall composition of said blend, and the second component comprises a copolymer of 85 to 95 mole % ethylene and 15 to 5 mole % butene-1.

9. A film according to claim 8, wherein the composition of the third component is selected from ethylene based copolymers, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

10. A multiple layer sheet structure comprising:
(a) a first layer (12) the composition of which includes (i) 40 to 70% by weight of a first component comprising a polypropylene polymer, (ii) a second component comprising an ethylene-based copolymer of ethylene and a second moiety comprising either propylene or butene-1; and (iii) a third component different from the second component which provides elastomeric properties; and
(b) a second layer (14) adhered to the first layer (12), the second layer not being a blend of polyethylene and a modifier.

11. A multiple layer sheet structure comprising:
(a) a first layer (16) of metal foil having two opposing surfaces on opposite sides thereof;
(b) a second layer (14) of an abuse resistant polymer adhered to one of the foil surfaces; and
(c) a third layer (12) adhered to said sheet structure on the other of the foil surfaces, the composition of the third layer being a blend of (i) 40 to 70% by weight of a polypropylene polymer, (ii) an ethylene-based copolymer comprising a copolymer of ethylene and a second moiety comprising either propylene or butene-1, and (iii) a third component different from the second component which provides elastomeric properties.

12. A sheet structure according to claim 10 or claim 11, wherein the second component is present in an amount of 5% to 35% by weight of the overall composition of the said blend.

13. A sheet structure according to any of claims 10 to 12, wherein the second component comprises a copolymer of 85 to 95 mole % ethylene and 15 to 5 mole % butene-1.

14. A sheet structure according to any of claims 10 to 12, wherein the second component comprises a copolymer of 60 to 80 mole % ethylene and 40 to 20 mole % propylene.

15. A sheet structure according to any of claims 10 to 14, wherein the third component is present in an amount of 10% to 40% by weight of the overall composition of said blend.

16. A sheet structure according to any of claims 10 to 15, wherein the composition of the third component is selected from ethylene based copolymer, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

17. A multiple layer sheet structure comprising:
(a) a first layer (18) of a polyamide having two opposing surfaces on opposite sides thereof;
(b) a second layer (20) of an ethylene vinyl alcohol copolymer having two opposing surfaces, one of which is disposed on one surface of the first layer;
(c) a third layer (22) of a polyamide disposed on the other surface of the second layer; and
(d) a fourth layer (12) adhered to said sheet structure on the other surface of the first layer, the composition of the fourth layer being a blend of (i) 40 to 70% by weight of a polypropylene polymer, (ii) an ethylene-based copolymer comprising a copolymer of ethylene and a second moiety comprising either propylene or butene-1 and (iii) a third component different from the second component and providing elastomeric properties.

18. A multiple layer sheet structure, comprising:
(a) a first layer (24) of a barrier material having two opposing surfaces on opposite sides thereof, the composition of the first layer being a vinylidene chloride copolymer;
(b) a second layer (14) of an abuse resistant polymer adhered to one of the surfaces of the first layer (24); and
(c) a third layer (12) adhered, in said sheet structure, on the other side of the first layer (24) the composition of the third layer being a blend of (i) 40 to 70% by weight of a polypropylene polymer, (ii) an ethylene-based copolymer comprising a copolymer of ethylene and a second moiety of propylene or butene-1, and (iii) a third component different from the second component and providing elastomeric properties.

19. A sheet structure according to claim 17 or claim 18, wherein the second component is present in an amount of 5% to 35% by weight of the overall composition of said blend.

20. A sheet structure according to any of claims 17 to 19, wherein the second component comprises a copolymer of 85 to 95 mole % ethylene and 15 to 5 mole % butene-1.

21. A sheet structure according to any of claims 17 to 19, wherein the second component comprises 60 to 80 mole % ethylene and 40 to 20 mole % propylene.

22. A sheet structure according to any of claims 17 to 21, wherein the third component is present in an amount of 10% to 40% by weight of the overall composition of said blend.

23. A sheet structure according to any of claims 17 to 22, wherein the composition of the third component is selected from ethylene based copolymers, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

24. A package made from a film according to any of claims 1 to 9.

25. A package made from a sheet structure according to any one of claims 10 to 23.

**Claims for the Contracting States: AT, ES**

1. A method of making polymeric film suitable for packaging use, comprising the step of blending:

(a) 40 to 70% by weight of a first component comprising a polypropylene polymer;

(b) a second component comprising an ethylene-based copolymer of ethylene and a second moiety comprising either propylene or butene-1; and

(c) a third component, different from the second component, which provides elastomeric properties and forming the blend into a film.

2. A method according to claim 1, wherein the second component is present in an amount of 5% to 35% by weight of the overall composition of said blend.

3. A method according to claim 1 or claim 2, wherein the second component includes or consists essentially of a copolymer of 85 to 95 mole % ethylene and 15 to 5 mole % butene-1.

4. A method according to claim 1 or claim 2, wherein the second component includes or consists essentially of a copolymer of 60 to 80 mole % ethylene and 40 to 20 mole % propylene.

5. A method according to any of claims 1 to 4, wherein the third component is present in an amount of 10% to 40% by weight of the overall composition of said blend.

6. A method according to any of claims 1 to 5, wherein the composition of the third component is selected from ethylene based copolymers, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

7. A method according to any of the preceding claims, wherein the second component is present in an amount of 5% to 35% by weight of the overall composition of the blend, the third component is present in an amount of 10% to 40% by weight of the overall composition of the blend, and wherein the composition of the third component is selected from styrene butadiene styrene block copolymer, styrene-ethylene/butylene-styrene block copolymer, styrene isoprene styrene block copolymer and polyisobutylene.

8. A method according to any of the preceding claims, wherein the second component is present in an amount of 5% to 35% by weight of the overall composition of said blend, and comprises a copolymer of 85 to 95 mole % ethylene and 15 to 5 mole % butene-1.

9. A method according to claim 8, wherein the composition of the third component is selected from ethylene based copolymers, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutylene-1, and isobutylene isoprene copolymer.

10. A multiple layer sheet structure, comprising:

(a) a first layer (12) the composition of which includes (i) 40 to 70% by weight of a first component comprising a polypropylene polymer, (ii) a second component comprising an ethylene-based copolymer of ethylene and a second moiety comprising either propylene or butene-1; and (iii) a third component different from the second component which provides elastomeric properties; and

(b) a second layer (14) adhered to the first layer (12),

the second layer not being a blend of polyethylene and a modifier.

11. A multiple layer sheet structure, comprising:

(a) a first layer (16) of metal foil having two opposing surfaces on opposite sides of the foil layer;

(b) a second layer (14) of an abuse resistant polymer adhered to one of the foil surfaces; and

(c) a third layer (12) adhered to said sheet structure on the other of the foil surfaces, the composition of the third layer being a blend of (i) 40 to 70% by weight of a polypropylene polymer, (ii) an ethylene-based copolymer comprising a copolymer of ethylene and a second moiety comprising either propylene or butene-1, and (iii) a third component different from the second component which provides elastomeric properties.

12. A sheet structure according to claim 10 or claim 11, wherein said second component is present in an amount of 5% to 35% by weight of the overall composition of said blend.

13. A sheet structure according to any of claims 10 to 12, wherein the second component comprises a copolymer of 85 to 95 mole % ethylene and 15 to 5 mole % butene-1.

14. A sheet structure according to any of claims 10 to 12, wherein the second component comprises a copolymer of 60 to 80 mole % ethylene and 40 to 20 mole % propylene.

15. A sheet structure according to any of claims 10 to 14, wherein the third component is present in an amount of 10% to 40% by weight of the overall composition of said blend.

16. A sheet structure according to any of claims 10 to 15, wherein the composition of the third component is selected from ethylene based copolymers, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

17. A multiple layer sheet structure, comprising:

(a) a first layer (18) of a polyamide having two opposing surfaces on opposite sides thereof;

(b) a second layer (20) of an ethylene vinyl alcohol copolymer having two opposing surfaces, one of which is disposed on one surface of the first layer (18);

(c) a third layer (22) of a polyamide disposed on the other surface of the second layer; and

(d) a fourth layer (12) adhered to said sheet structure on the other surface of the first layer, the composition of the fourth layer being a blend of (i) 40 to 70% by weight of a polypropylene polymer, (ii) an ethylene-based copolymer comprising a copolymer of ethylene and a second moiety comprising either propylene or butene-1 and (iii) a third component different from the second component and providing elastomeric properties.

18. A multiple layer sheet structure, comprising:

(a) a first layer (24) of a barrier material having two opposing surfaces on opposite sides thereof, the composition of the first layer being a vinylidene chloride copolymer;

(b) a second layer (14) of an abuse resistant polymer adhered to one of the surfaces of the first layer (24); and

(c) a third layer (12) adhered, in said sheet structure, on the other side of the first layer (24) the composition of the third layer being a blend of (i) 40 to 70% by weight of a polypropylene polymer, (ii) an ethylene-based copolymer comprising a copolymer of ethylene and a second moiety of propylene or butene-1, and (iii) a third component different from the second component and providing elastomeric properties.

19. A sheet structure according to claim 17 or claim 18, wherein the second component is present in an amount of 5% to 35% by weight of the overall composition of said blend.

20. A sheet structure according to any of claims 17 to 19, wherein the second component comprises a copolymer of 85 to 95 mole % ethylene and 15 to 5 mole % butene-1.

21. A sheet structure according to any of claims 17 to 19, wherein the second component comprises 60 to 80 mole % ethylene and 40 to 20 mole % propylene.

22. A sheet structure according to any of claims 17 to 21, wherein the third component is present in an amount of 10% to 40% by weight of the overall composition of the blend.

23. A sheet structure according to any of claims 17 to 21, wherein the composition of the third component is selected from ethylene based copolymers, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

24. A package made from a sheet structure according to any of claims 10 to 23.

**Patentansprüche für die Vertragsstaaten: BE, CH, DE, FR, GB, GR, IT, LI, LU, NL, SE**

1. Eine Polymerfolie, umfassend eine Mischung aus:

(a) 40 bis 70 Gew.-% einer ersten Komponente, die ein Polypropylenpolymer umfaßt;

(b) eine zweite Komponente, die ein Copolymer auf Äthylenbasis von Äthylen und einem zweiten Anteil, umfassend entweder Propylen oder Buten-1, umfaßt; und

(c) eine dritte Komponente, die von der zweiten Komponente verschieden ist, die elastomere Eigenschaften liefert.

2. Eine Folie nach Anspruch 1, bei der die zweite Komponente in einer Menge von 5 bis 35 Gew.-% der Gesamtzusammensetzung dieser Mischung vorhanden ist.

3. Eine Folie nach Anspruch 1 oder Anspruch 2, bei der die zweite Komponente aus einem Copolymer von 85 bis 95 Mol-% Äthylen und 15 bis 5 Mol-% Buten-1 besteht.

4. Eine Folie nach Anspruch 1 oder Anspruch 2, bei der die zweite Komponente aus einem Copolymer von 60 bis 80 Mol-% Äthylen und 40 bis 20 Mol-% Propylen besteht.

5. Eine Folie nach einem der Ansprüche 1 bis 4, bei der die dritte Komponente in einer Menge von 10 bis 40 Gew.-% der Gesamtzusammensetzung dieser Mischung vorhanden ist.

6. Eine Folie nach einem der Ansprüche 1 bis 5, bei der die Zusammensetzung der dritten Komponente aus Copolymeren auf Äthylenbasis, Polybutylen, Polyisobutylen, Äthylenpropylendien-Monomerterpolymer, Styrolbutadienstyrol-Blockcopolymer, Styrol-Äthylen/Butylen-Styrol-Blockcopolymer, Styrolisoprenstyrol-Blockcopolymer, Polybuten-1 und Isobutylenisopren-Copolymer ausgewählt ist.

7. Eine Folie nach einem der vorhergehenden Ansprüche, bei der die zweite Komponente in einer Menge von 5 bis 35 Gew.-% der Gesamtzusammensetzung der Mischung vorhanden ist, die dritte Komponente in einer Menge von 10 bis 40 Gew.-% der Gesamtzusammensetzung der Mischung vorhanden ist und bei der die Zusammensetzung dieser dritten Komponente aus Styrolbutadienstyrol-Blockcopolymer, Styrol-Äthylen/Butylen-Styrol-Blockcopolymer, Styrolisoprenstyrol-Blockcopolymer und Polyisobutylen ausgewählt ist.

8. Eine Folie nach einem der vorhergehenden Ansprüche, bei der die zweiten Komponente in einer Menge von 5 bis 35 Gew.-% der Gesamtzusammensetzung dieser Mischung vorhanden ist und die zweite Komponente ein Copolymer von 35 bis 95 Mol.-% Äthylen und 15 bis 5 Mol-% Buten-1 umfaßt.

9. Eine Folie nach Anspruch 8, bei der die Zusammensetzung der dritten Komponenta aus Copolymeren auf Äthylenbasis, Polybutylen, Polyisobutylen, Äthylenpropylendien-Monomerterpolymer, Styrolbutadienstyrol-Blockcopolymer, Styrol-Äthylen/Butylen-Styrol-Blockcopolymer, Styrolisoprenstyrol-Blockcopolymer, Polybuten-1 und Isobutylenisopren-Copolymer ausgewählt ist.

10. Eine blatt- oder folienartige Mehrschichtenstruktur, umfassend:

(a) eine erste Schicht (12), deren Zusammensetzung (i) 40 bis 70 Gew.-% einer ersten Komponente, die ein Polypropylenpolymer umfaßt, (ii) eine zweite Komponente, die ein Copolymer auf Äthylenbasis von Äthylen und einem zweiten Anteil, umfassend entweder Propylen oder Buten-1, umfaßt, und (iii) eine dritte Komponente, die von der zweiten Komponente verschieden ist, die elastomere Eigenschaften liefert, enthält; und

(b) eine zweite Schicht (14), die an der ersten Schicht (12) haftet,

wobei die zweite Schicht nicht eine Mischung von Polyäthylen und einem Modifikationsmittel ist.

11. Eine blatt- oder folienartige Mehrschichtenstruktur, umfassend:

(a) eine erste Schicht (16) aus Metallfolie mit zwei gegenüberliegenden Oberflächen auf ihren entgegengesetzten Seiten;

(b) eine zweite Schicht (14) aus einem gegen Mißbrauch beständigen Polymer, die an einer der Folienoberflächen haftet; und

(c) eine dritte Schicht (12), die an der Schichtstruktur auf der anderen der Folienoberflächen haftet, wobei die Zusammensetzung der dritten Schicht eine Mischung von (i) 40 bis 70 Gew.-% eines Polypropylenpolymeren, (ii) einem Copolymer auf Äthylenbasis, das ein Copolymer von Äthylen und einem zweiten Anteil, umfassend entweder Propylen oder Buten-1, umfaßt, und (iii) einer dritten Komponente, die von der zweiten Komponente verschieden ist, die elastomere Eigenschaften liefert, ist.

12. Eine Schichtstruktur nach Anspruch 10 oder Anspruch 11, bei der die zweite Komponente in einer Menge von 5 bis 35 Gew.-% der Gesamtzusammensetzung dieser Mischung vorhanden ist.

13. Eine Schichtstruktur nach einem der Ansprüche 10 bis 12, bei der die zweite Komponente ein Copolymer von 85 bis 95 Mol.-% Äthylen und 15 bis 5 Mol-% Buten-1 umfaßt.

14. Eine Schichtenstruktur nach einem der Ansprüche 10 bis 12, bei der die zweite Komponente ein Copolymer von 60 bis 80 Mol-% Äthylen und 40 bis 20 Mol-% Propylen umfaßt.

15. Eine Schichtenstruktur nach einem der Ansprüche 10 bis 14, bei der die dritte Komponente in einer Menge von 10 bis 40 Gew.-% der Gesamtzusammensetzung dieser Mischung vorhanden ist.

16. Eine Schichtenstruktur nach einem der Ansprüche 10 bis 15, bei der die Zusammensetzung der dritten Komponente aus Copolymer auf Äthylenbasis, Polybutylen, Polyisobutylen, Äthylenpropylendien-Monomerterpolymer, Styrolbutadienstyrol-Blockcopolymer, Styrol-Äthylen/Butylen-styrol-Blockcopolymer, Styrolisoprenstyrol-Blockcopolymer, Polybuten-1, und Isobutylenisopren-Copolymer ausgewählt ist.

17. Eine blatt- oder folienartige Mehrschichtenstruktur, umfassend:

(a) eine erste Schicht (18) aus einem Polyamid mit zwei gegenüberliegenden Oberflächen auf ihren entgegengesetzten Seiten;

(b) eine zweite Schicht (20) aus einem Äthylenvinylalkohol-Copolymer mit zwei gegenüberliegenden Oberflächen, von denen eine auf einer Oberfläche der ersten Schicht angeordnet ist;

(c) eine dritte Schicht (22) aus einem Polyamid, die auf der anderen Oberfläche der zweiten Schicht angeordnet ist; und

(d) eine vierte Schicht (12), die an dieser Schichtstruktur auf der anderen Oberfläche der ersten Schicht haftet, wobei die Zusammensetzung der vierten Schicht eine Mischung von (i) 40 bis 70 Gew.-% eines Polypropylenpolymeren, (ii) einem Copolymer auf Äthylenbasis, das ein Copolymer von Äthylen und einem zweiten Anteil, umfassend entweder Propylen oder Buten-1, umfaßt, und (iii) einer dritten Komponente, die von der zweiten Komponente verschieden ist und elastomere Eigenschaften liefert, ist.

18. Eine blatt- oder folienartige Mehrschichtenstruktur, umfassend:

(a) eine erste Schicht (24) aus einem Sperrschichtmaterial mit zwei gegenüberliegenden Oberflächen auf ihren entgegengesetzten Seiten, wobei die Zusammensetzung der ersten Schicht ein Vinylidenchlorid-Copolymer ist;

(b) eine zweite Schicht (14) aus einem gegen Mißbrauch beständigen Polymer, die an einer der Oberflächen der esten Schicht (24) haftet; und

(c) eine dritte Schicht (12), die in diesem Schichtenaufbau auf der anderen Seite der ersten Schicht (24) haftet, wobei die Zusammensetzung der dritten Schicht eine Mischung von (i) 40 bis 70 Gew.-% eines Polypropylenpolymeren, (ii) einem Copolymer auf. Äthylenbasis, das ein Copolymer von Äthylen und einem zweiten Anteil aus Propylen oder Buten-1 umfaßt, und (iii) einer dritten Komponente, die von der zweiten Komponente verschieden ist und elastomere Eigenschaften liefert, ist.

19. Eine Schichtenstruktur nach Anspruch 17 oder Anspruch 18, bei der die zweiten Komponente in einer Menge von 5 bis 35 Gew.-% der Gesamtzusammensetzung dieser Mischung vorhanden ist.

20. Eine Schichtenstruktur nach einem der Ansprüche 17 bis 19, bei der die zweiten Komponente ein Copolymer von 85 bis 95 Mol-% Äthylen und 15 bis 5 Mol-% Buten-1 umfaßt.

21. Eine Schichtenstruktur nach einem der Ansprüche 17 bis 19, bei der die zweite Komponente 60 bis 80 Mol-% Äthylen und 40 bis 20 Mol-% Propylen umfaßt.

22. Eine Schichtenstruktur nach einem der Ansprüche 17 bis 21, bei der die dritte Komponente in einer Menge von 10 bis 40 Gew.-% der Gesamtzusammensetzung dieser Mischung vorhanden ist.

23. Eine Schichtenstruktur nach einem der Ansprüche 17 bis 22, bei der die Zusammensetzung der dritten Komponente aus Copolymeren auf Äthylenbasis, Polybutylen, Polyisobutylen, Äthylenpropylendien-Monomerterpolymer, Styrolbutadienstyrol-Blockcopolymer, Styrol-Äthylen/Butylen-Styrol-Blockcopolymer, Styrolisoprenstyrol-Blockcopolymer, Polybuten-1 und Isobutylenisopren-Copolymer ausgewählt ist.

24. Eine Verpackung, die aus einer Folie gemäß einem der Ansprüche 1 bis 9 hergestellt ist.

25. Eine Verpackung, die aus einer Schichtenstruktur gemäß einem der Ansprüche 10 bis 23 hergestellt ist.

**Patentansprüche für die Vertragsstaaten: AT, ES**

1. Ein Verfahren zum Herstellen von Polymerfolie, die für Verpackungszwecke geeignet ist, das die Verfahrensschritte des Mischens von:
(a) 40 bis 70 Gew.-% einer ersten Komponente, die ein Polypropylenpolymer umfaßt;
(b) einer zweiten Komponente, die ein Copolymer auf Äthylenbasis von Äthylen und einem zweiten Anteil, umfassend entweder Propylen oder Buten-1, umfaßt; und
(c) einer dritten Komponente, die von der zweiten Komponente verschieden ist, die elastomere Eigenschaften liefert,
und Ausformens der Mischung zu einer Folie umfaßt.

2. Verfahren nach Anspruch 1, bei dem die zweite Komponente in einer Menge von 5 bis 35 Gew.-% der Gesamtzusammensetzung dieser Mischung vorhanden ist.

3. Verfahren nach Anspruch 1 oder Anspruch 2, bei dem die zweite Komponente ein Copolymer von 85 bis 95 Mol-% Äthylen und 15 bis 5 Mol-% Buten-1 enthält oder im wesentlichen daraus besteht.

4. Verfahren nach Anspruch 1 oder Anspruch 2, bei dem die zweite Komponente ein Copolymer von 60 bis 80 Mol-% Äthylen und 40 bis 20 Mol-% Propylen enthält oder im wesentlichen daraus besteht.

5. Verfahren nach einem der Ansprüche 1 bis 4, bei dem die dritte Komponente in einer Menge von 10 bis 40 Gew.-% der Gesamtzusammensetzung dieser Mischung vorhanden ist.

6. Verfahren nach einem der Ansprüche 1 bis 5, bei dem die Zusammensetzung der dritten Komponente aus Copolymeren auf Äthylenbasis, Polybutylene, Polyisobutylen, Äthylenpropylendien-Monomerterpolymer, Styrolbutadienstyrol-Blockcopolymer, Styrol-Äthylen/Butylen-Styrol-Blockcopolymer, Styrolisoprenstyrol-Blockcopolymer, Polybuten-1 und Isobutylenisopren-Copolymer ausgewählt ist.

7. Verfahren nach einem der vorhergehenden Ansprüche, bei dem die zweite Komponente in einer Menge von 5 bis 35 Gew.-% der Gesamtzusammensetzung der Mischung vorhanden ist, die dritte Komponente in einer Menge von 10 bis 40 Gew.-% der Gesamtzusammensetzung der Mischung vorhanden ist und bei dem die Zusammensetzung der dritten Komponente aus Styrolbutandienstyrol-Blockcopolymer, Styrol-Äthylen/ Butylen-Styrol-Blockcopolymer, Styrolisoprensty-rol-Blockcopolymer und Polyisobutylen ausge-wählt ist.

8. Verfahren nach einem der vorhergehenden Ansprüche, bei dem die zweite Komponente in einer Menge von 5 bis 35 Gew.-% der Gesamtzusammensetzung dieser Mischung vorhanden ist und ein Copolymer von 85 bis 95 Mol-% Äthylen und 15 bis 5 Mol-% Buten-1 umfaßt.

9. Verfahren nach Anspruch 8, bei dem die Zusammensetzung der dritten Komponente aus Copolymeren auf Äthylenbasis, Polybutylen, Polyisobutylen, Äthylenpropylendien-Monomer-terpolymer, Styrolbutadienstyrol-Blockcopoly-mer, Styrol-Äthylen/Butylen-Styrol-Blockcopoly-mer, Styrolisoprenstyrol-Blockcopolymer, Poly-buten-1 und Isobutylenisopren-Copolymer ausgewählt ist.

10. Eine blatt- oder folienartige Mehrschichtenstruktur, umfassend:
(a) eine erste Schicht (12), deren Zusammensetzung (i) 40 bis 70 Gew.-% einer ersten Komponente, die ein Polypropylenpolymer umfaßt, (ii) eine zweite Komponente, die ein Copolymer auf Äthylenbasis von Äthylen und einem zweiten Anteil, umfassend entweder Propylen oder Buten-1, umfaßt, und (iii) eine dritte Komponente, die von der zweiten Komponente verschieden ist, die elastomere Eigenschaften liefert, enthält; und
(b) eine zweite Schicht (14), die an der ersten Schicht (12) haftet,
wobei die zweite Schicht nicht eine Mischung von Polyäthylen und einem Modifikationsmittel ist.

11. Eine blatt- oder folienartige Mehrschichtenstruktur, umfassend:
(a) eine erste Schicht (16) aus Metallfolie mit zwei gegenüberliegenden Oberflächen auf entgegengesetzten Seiten der Folienschicht;
(b) eine zweite Schicht (14) aus einem gegen Mißbrauch beständigen Polymer, die an einer der Folienoberflächen haftet; und
(c) eine dritte Schicht (12), die an der Schichtstruktur auf der anderen der Folienoberflächen haftet, wobei die Zusammensetzung der dritten Schicht eine Mischung von (i) 40 bis 70 Gew.-% eines Polypropylenpolymeren, (ii) einem Copolymer auf Äthylenbasis, das ein Copolymer von Äthylen und einem zweiten Anteil, umfassend entweder Propylen oder Buten-1, umfaßt, und (iii) einer dritten Komponente, die von der zweiten Komponente verschieden ist, die elastomere Eigenschaften liefert ist.

12. Eine Schichtenstruktur nach Anspruch 10 oder Anspruch 11, bei der die zweite Komponente in einer Menge von 5 bis 35 Gew.-% der Gesamtzusammensetzung dieser Mischung vorhanden ist.

13. Eine Schichtenstruktur nach einem der Ansprüche 10 bis 12, bei der die zweite Komponente ein Copolymer von 85 bis 95 Mol-% Äthylen und 15 bis 5 Mol-% Buten-1 umfaßt.

14. Eine Schichtenstruktur nach einem der Ansprüche 10 bis 12, bei der die zweite Komponente ein Copolymer von 60 bis 80 Mol-% Äthylen und 40 bis 20 Mol-% Propylen umfaßt.

15. Eine Schichtenstruktur nach einem der Ansprüche 10 bis 14, bei der die dritte Komponente in einer Menge von 10 bis 40 Gew.-% der Gesamtzusammensetzung dieser Mischung vorhanden ist.

16. Eine Schichtenstruktur nach einem der Ansprüche 10 bis 15, bei der die Zusammensetzung der dritten Komponente aus Copolymeren auf Äthylenbasis, Polybutylen, Polyisobutylen, Äthylenpropylendien-Monomerterpolymer, Styrolbutadienstyrol-Blockcopolymer, Styrol-Äthylen/Butylen-styrol-Blockcopolymer, Styrolisoprenstyrol-Blockcopolymer, Polybuten-1 und Isobutylenisopren-Copolymer ausgewählt ist.

17. Eine blatt- oder folienartige Mehrschichtenstruktur, umfassend:

(a) eine erste Schicht (18) aus einem Polyamid mit zwei gegenüberliegenden Oberflächen auf ihren entgegengesetzten Seiten;

(b) eine zweite Schicht (20) aus einem Äthylenvinylalkohol-Copolymer mit zwei gegenüberliegenden Oberflächen, von denen eine auf einer Oberfläche der ersten Schicht (18) angeordnet ist;

(c) eine dritte Schicht (22) aus einem Polyamid, die auf der anderen Oberfläche der zweiten Schicht angeordnet ist; und

(d) eine vierte Schicht (12), die an dieser Schichtenstruktur auf der anderen Oberfläche der ersten Schicht haftet, wobei die Zusammensetzung der vierten Schicht eine Mischung von (i) 40 bis 70 Gew.-% eines Polypropylenpolymeren, (ii) einem Copolymer auf Äthylenbasis, das ein Copolymer von Äthylen und einem zweiten Anteil, umfassend entweder Propylen oder Buten-1, umfaßt, und (iii) einer dritten Komponente, die von der zweiten Komponente verschieden ist und elastomere Eigenschaften liefert, ist.

18. Eine blatt- oder folienartige Mehrschichtenstruktur, umfassend:

(a) eine erste Schicht (24) aus einem Sperrschichtmaterial mit zwei gegenüberliegenden Oberflächen auf ihren entgegengesetzten Seiten, wobei die Zusammensetzung der ersten Schicht ein Vinylidenchlorid-Copolymer ist;

(b) eine zweite Schicht (14) aus einem gegen Mißbrauch beständigen Polymere, die an einer der Oberflächen der ersten Schicht (24) haftet; und

(c) eine dritte Schicht (12), die in diesem Schichtenaufbau auf der anderen Seite der ersten Schicht (24) haftet, wobei die Zusammensetzung der dritten Schicht eine Mischung von (i) 40 bis 70 Gew.-% eines Polypropylenpolymeren, (ii) einem Copolymer auf Äthylenbasis, das ein Copolymer von Äthylen und einem zweiten Anteil aus Propylen oder Buten-1 umfaßt, und (iii) einer dritten Komponente, die von der zweiten Komponente verschieden ist und elastomere Eigenschaften liefert, ist.

19. Eine Schichtenstruktur nach Anspruch 17 oder Anspruch 18, bei der die zweite Komponente in einer Menge von 5 bis 35 Gew.-% der Gesamtzusammensetzung dieser Mischung vorhanden ist.

20. Eine Schichtenstruktur nach einem der Ansprüche 17 bis 19, bei der die zweite Komponent ein Copolymer von 85 bis 95 Mol-% Äthylen und 15 bis 5 Mol-% Buten-1 umfaßt.

21. Eine Schichtenstruktur nach einem der Ansprüche 17 bis 19, bei der die zweite Komponente 60 bis 80 Mol-% Äthylen und 40 bis 20 Mol-% Propylen umfaßt.

22. Eine Schichtenstruktur nach einem der Ansprüche 17 bis 21, bei der die dritte Komponente in einer Menge von 10 bis 40 Gew.-% der Gesamtzusammensetzung dieser Mischung vorhanden ist.

23. Eine Schichtenstruktur nach einem der Ansprüche 17 bis 22, bei der die Zusammensetzung der dritten Komponente aus Copolymeren auf Äthylenbasis, Polybutylen, Polyisobutylen, Äthylenpropylendien-Monomerterpolymer, Styrolbutadienstyrol-Blockcopolymer, Styrol-Äthylen/Butylen-Styrol-Blockcopolymer, Styrolisoprenstyrol-Blockcopolymer, Polybuten-1 und Isobutylenisopren-Copolymer ausgewählt ist.

24. Eine Verpackung, die aus einer Schichtenstruktur gemäß einem der Ansprüche 10 bis 23 hergestellt ist.

**Revendications Pour les Etats Contractants: BE, CH, DE, FR, GB, IT, LI, LU, NL, SE**

1. Pellicule synthétique comprenant un mélange:

a) de 40 à 70% en poids d'un premier composant constitué par un polymère de polypropylène;

b) d'un deuxième composant constitué par un copolymère à base d'éthylène comprenant de l'éthylène et une seconde partie constituée soit par du propylène soit par du butène-1; et

c) d'un troisième composant, différent du deuxième composant, qui fournit des propriétés d'un élastomère.

2. Pellicule suivant la revendication 1 caractérisée en ce que le deuxième composant est présent à raison de 5% à 35% en poids de la composition totale du mélange.

3. Pellicule suivant la revendication 1 ou la revendication 2 caractérisée en ce que le deuxième composant est constitué par un copolymère de 85 à 95% molaire d'éthylène et de 15 à 5% molaire de butène-1.

4. Pellicule suivant la revendication 1 ou la revendication 2 caractérisée en ce que le deuxième composant est constitué par un copolymère de 60 à 80% molaire d'éthylène et de 40 à 20% molaire de propylène.

5. Pellicule suivant l'une quelconque des revendications 1 à 4 caractérisée en ce que le troisième composant est présent à raison de 10 à 40% en poids de la composition totale du mélange.

6. Pellicule suivant l'une quelconque des revendications 1 à 5 caractérisée en ce que la composition du troisième composant est choisie parmi les copolymères à base d'éthylène, le polybutylène, le polyisobutylène, le terpolymère éthylène propylène diène-monomère, le copolymère bloc styrène butadiène styrène, le copolymère bloc styrène-éthylène/butylène-styrène, le copolymère bloc styrène isoprène styrène, le polybutène-1 et le copolymère isobutylène isoprène.

7. Pellicule suivant l'une quelconque des revendications précédentes caractérisée en ce que le deuxième composant est présent à raison de 5% à 35% en poids de la composition totale du mélange, le troisième composant est présent à raison de 10 à 40% en poids de la composition totale du mélange, et la composition du troisième composant est choisie parmi le copolymère bloc styrène butadiène styrène, le copolymère bloc styrène-éthylène/butylène-styrène, le copolymère bloc styrène isoprène styrène et le polyisobutylène.

8. Pellicule suivant l'une quelconque des revendications précédentes caractérisée en ce que le deuxième composant est présent à raison de 5% à 35% en poids de la composition totale du mélange et le deuxième composant est constitué par un copolymère de 85 à 95% molaire d'éthylène et de 15 à 5% molaire de butène-1.

9. Pellicule suivant la revendication 8 caractérisée en ce que la composition du troisième composant est choisie parmi les copolymères à base d'éthylène, le polybutylène, le polyisobutylène, le terpolymère éthylène propylène diène-monomère, le copolymère bloc styrène butadiène styrène, le copolymère bloc styrène-éthylène/butylène-styrène, le copolymère bloc styrène isoprène styrène, le polybutène-1 et le copolymère isobutylène isoprène.

10. Structure de feuille à couches multiples comprenant:

a) une première couche (12) dont la composition comprend:

(i) 40 à 70% en poids d'un premier composant constitué par un polymère de polypropylène;

(ii) un deuxième composant constitué par un copolymère à base d'éthylène comprenant de l'éthylène et une seconde partie constituée soit par du propylène soit par du butène-1; et

(iii) un troisième composant, différent du deuxième composant, qui fournit des propriétés d'un élastomère, et

b) une seconde couche (14) adhérant à la première couche (12), cette seconde couche n'étant pas un mélange de polyéthylène et d'un modificateur.

11. Structure de feuille à couches multiples comprenant:

a) une première couche (16) d'un feuillard métallique ayant deux surfaces opposées sur les deux côtés opposés de ce feuillard;

b) une deuxième couche (14) d'un polymère résistant aux chocs adhérant à l'une des surfaces du feuillard; et

c) une troisième couche (12) adhérant à la structure de la feuille sur l'autre des surfaces du feuillard, la composition de cette troisième couche étant un mélange comprenant:

(i) 40 à 70% en poids d'un premier composant constitué par un polymère de polypropylène;

(ii) un deuxième composant constitué par un copolymère à base d'éthylène comprenant de l'éthylène et une seconde partie constituée soit par du propylène soit par du butène-1; et

(iii) un troisième composant, différent du deuxième composant, qui fournit des propriétés d'un élastomère.

12. Structure de feuille suivant la revendication 10 ou la revendication 11 caractérisée en ce que le deuxième composant est présent à raison de 5% à 35% en poids de la composition totale du mélange.

13. Structure de feuille suivant l'une quelconque des revendications 10 à 12 caractérisée en ce que le deuxième composant est constitué par un copolymère de 85 à 95% molaire d'éthylène et de 15 à 5% molaire de butène-1.

14. Structure de feuille suivant l'une quelconque des revendications 10 à 12 caractérisée en ce que le deuxième composant est constitué par un copolymère de 60 à 80% molaire d'éthylène et de 40 à 20% molaire de propylène.

15. Structure de feuille suivant l'une quelconque des revendications 10 à 14 caractérisée en ce que le troisième composant est présent à raison de 10 à 40% en poids de la composition totale du mélange.

16. Structure de feuille suivant l'une quelconque des revendications 10 à 15 caractérisée en ce que la composition du troisième composant est choisie parmi les copolymères à base d'éthylène, le polybutylène, le polyisobutylène, le terpolymère éthylène propylène diène-monomère, le copolymère bloc styrène butadiène styrène, le copolymère bloc styrène-éthylène/butylène-styrène, le copolymère bloc styrène isoprène styrène, le polybutène-1 et le copolymère isobutylène isoprène.

17. Structure de feuille à couches multiples comprenant:

a) une première couche (18) d'un polyamide ayant deux surfaces opposées sur les côtés opposés de cette couche;

b) une deuxième couche (20) d'un copolymère éthylène alcool vinylique ayant deux surfaces opposées, l'une de ces surfaces étant disposée sur une surface de la première couche;

c) une troisième couche (22) d'un polyamide disposé sur l'autre surface de la seconde couche; et

d) une quatrième couche (12) adhérant à la structure de la feuille sur l'autre surface de la première couche, la composition de la quatrième couche étant un mélange comprenant:

(i) 40 à 70% en poids d'un premier composant constitué par un polymère de polypropylène;

(ii) un deuxième composant constitué par un copolymère à base d'éthylène comprenant de l'éthylène et une seconde partie constituée soit par du propylène soit par du butène-1; et

(iii) un troisième composant, différent du deuxième composant, qui fournit des propriétés d'un élastomère.

18. Structure de feuille à couches multiples comprenant:

a) une première couche (24) d'un matériau formant barrière, ayant deux surfaces opposées sur les côtés opposés de cette couche, la composition de cette première couche étant un copolymère de chlorure de vinylidène;

b) une deuxième couche (14) d'un polymère résistant aux chocs adhérant à l'une des surfaces de la première couche (24); et

c) une troisième couche (12) adhérant, dans ladite structure de la feuille, sur l'autre côté de la première couche (24), la composition de la troisième couche étant un mélange comprenant:

(i) 40 à 70% en poids d'un premier composant constitué par un polymère de polypropylène;

(ii) un deuxième composant constitué par un copolymère à base d'éthylène comprenant de l'éthylène et une seconde partie constituée soit par du propylène soit par du butène-1; et

(iii) un troisième composant, différent du deuxième composant, qui fournit des propriétés d'un élastomère.

19. Structure de feuille suivant la revendication 17 ou la revendication 18 caractérisée en ce que le deuxième composant est présent à raison de 5% à 35% en poids de la composition totale du mélange.

20. Structure de feuille suivant l'une quelconque des revendications 17 à 19 caractérisée en ce que le deuxième composant est constitué par un copolymère de 85 à 95% molaire d'éthylène et de 15 à 5% molaire de butène-1.

21. Structure de feuille suivant l'une quelconque des revendications 17 à 19 caractérisée en ce que le deuxième composant est constitué par un copolymère de 60 à 80% molaire d'éthylène et de 40 à 20% molaire de propylène.

22. Structure de feuille suivant l'une quelconque des revendications 17 à 21 caractérisée en ce que le troisième composant est présent à raison de 10 à 40% en poids de la composition totale du mélange.

23. Structure de feuille suivant l'une quelconque des revendications 17 à 22 caractérisée en ce que la composition du troisième composant est choisie parmi les copolymères à base d'éthylène, le polybutylène, le polyisobutylène, le terpolymère, éthylène propylène diène monomère, le copolymère bloc styrène butadiène styrène, le copolymère bloc styrène-éthylène/butylène-styrène, le copolymère bloc styrène isoprène styrène, le polybutène-1 et le copolymère isobutylène isoprène.

24. Emballage réalisè à partir d'une pellicule suivant l'une quelconque des revendications 1 à 9.

25. Emballage réalisé à partir d'une structure de feuille suivant l'une quelconque des revendications 10 à 23.

**Revendications Pour les Etats Contractants: AT, ES**

1. Procédé de fabrication d'une pellicule synthétique comprenant les étapes consistant à mélanger:

a) 40 à 70% en poids d'un premier composant constitué par un polymère de polypropylène;

b) un deuxième composant constitué par un copolymère à base d'éthylène comprenant de l'éthylène et une seconde partie constituée soit par du propylène soit par du butène-1; et

c) un troisième composant, différent du deuxième composant, qui fournit des propriétés d'un élastomère,

et à former une pellicule à partir du mélange.

2. Procédé suivant la revendication 1 caractérisée en ce que le deuxième composant est présent à raison de 5% à 35% en poids de la composition totale du mélange.

3. Procédé suivant la revendication 1 ou la revendication 2 caractérisée en ce que le deuxième composant est constitué par un copolymère de 85 à 95% molaire d'éthylène et de 15 à 5% molaire de butène-1.

4. Procédé suivant la revendication 1 ou la revendication 2 caractérisée en ce que le deuxième composant est constitué par un copolymère de 60 à 80% molaire d'éthylène et de 40 à 20% molaire de propylène.

5. Procédé suivant l'une quelconque des revendications 1 à 4 caractérisée en ce que le troisième composant est présent à raison de 10 à 40% en poids de la composition totale du mélange.

6. Procédé suivant l'une quelconque des revendications 1 à 5 caractérisée en ce que la composition du troisième composant est choisie parmi les copolymères à base d'éthylène, le polybutylène, le polyisobutylène, le terpolymère éthylène propylène diène-monomère, le copolymère bloc styrène butadiène styrène, le copolymère bloc styrène-éthylène/butylène-styrène, le copolymère bloc styrène isoprène styrène, le polybutène-1 et le copolymère isobutylène isoprène.

7. Procédé suivant l'une quelconque des revendications précédentes caractérisée en ce que le deuxième composant est présent à raison de 5% à 35% en poids de la composition totale du mélange, le troisième composant est présent à raison de 10 à 40% en poids de la composition totale du mélange, et la composition du troisième composant est choisie parmi le copolymère bloc styrène butadiène styrène, le copolymère bloc styrène-éthylène/butylène-styrène, le copolymère bloc styrène isoprène styrène et le polyisobutylène.

8. Procédé suivant l'une quelconque des revendications précédentes caractérisée en ce que le deuxième composant est présent à raison de 5% à 35% en poids de la composition totale du mélange et le deuxième composant est constitué par un copolymère de 85 à 95% molaire d'éthylène et de 15 à 5% molaire de butène-1.

9. Procédé suivant la revendication 8 caractérisée en ce que la composition du troisième composant est choisie parmi les copolymères à base d'éthylène, le polybutylène, le polyisobutylène, le terpolymère éthylène propylène diènemonomère, le copolymère bloc styrène butadiène styrène, le copolymère bloc styrène-éthylène/butylène-styrène, le copolymère bloc styrène isoprène styrène, le polybutène-1 et le copolymère isobutylène isoprène.

10. Structure de feuille à couches multiples comprenant:

a) une première couche (12) dont la composition comprend:

(i) 40 à 70% en poids d'un premier composant constitué par un polymère de polypropylène;

(ii) un deuxième composant constitué par un copolymère à base d'éthylène comprenant de l'éthylène et une seconde partie constituée soit par du propylène soit par du butène-1; et

(iii) un troisième composant, différent du deuxième composant, qui fournit des propriétés d'un élastomère, et

b) une seconde couche (14) adhérant à la première couche (12), cette seconde couche n'étant pas un mélange de polyéthylène et d'un modificateur.

11. Structure de feuille à couches multiples comprenant:

a) une première couche (16) d'un feuillard métallique ayant deux surfaces opposées sur les deux côtés opposés de ce feuillard;

b) une deuxième couche (14) d'un polymère résistant aux chocs adhérant à l'une des surfaces du feuillard; et

c) une troisième couche (12) adhérant à la structure de la feuille sur l'autre des surfaces du feuillard, la composition de cette troisième couche étant un mélange comprenant:

(i) 40 à 70% en poids d'un premier composant constitué par un polymère de polypropylène;

(ii) un deuxième composant constitué par un copolymère à base d'éthylène comprenant de l'éthylène et une seconde partie constituée soit par du propylène soit par du butène-1; et

(iii) un troisième composant, différent du deuxième composant, qui fournit des propriétés d'un élastomère.

12. Structure de feuille suivant la revendication 10 ou la revendication 11 caractérisée en ce que le deuxième composant est présent à raison de 5% à 35% en poids de la composition totale du mélange.

13. Structure de feuille suivant l'une quelconque des revendications 10 à 12 caractérisée en ce que le deuxième composant est constitué par un copolymère de 85 à 95% molaire d'éthylène et de 15 à 5% molaire de butène-1.

14. Structure de feuille suivant l'une quelconque des revendications 10 à 12 caractérisée en ce que le deuxième composant est constitué par un copolymère de 60 à 80% molaire d'éthylène et de 40 à 20% molaire de propylène.

15. Structure de feuille suivant l'une quelconque des revendications 10 à 14 caractérisée en ce que le troisième composant est présent à raison de 10 à 40% en poids de la composition totale du mélange.

16. Structure de feuille suivant l'une quelconque des revendications 10 à 15 caractérisée en ce que la composition du troisième composant est choisie parmi les copolymères à base d'éthylène, le polybutylène, le polyisobutylène, le terpolymère éthylène propylène diène-monomère, le copolymère bloc styrène butadiène styrène, le copolymère bloc styrène-éthylène/butylène-styrène, le copolymère bloc styrène isoprène styrène, le polybutène-1 et le copolymère isobutylène isoprène.

17. Structure de feuille à couches multiples comprenant:

a) une première couche (18) d'un polyamide ayant deux surfaces opposées sur les côtés opposés de cette couche;

b) une deuxième couche (20) d'un copolymère éthylène alcool vinylique ayant deux surfaces opposées, l'une de ces surfaces étant disposée sur une surface de la première couche;

c) une troisième couche (22) d'un polyamide disposé sur l'autre surface de la seconde couche; et

d) une quatrième couche (12) adhérant à la structure de la feuille sur l'autre surface de la première couche, la composition de la quatrième couche étant un mélange comprenant:

(i) 40 à 70% en poids d'un premier composant constitué par un polymère de polypropylène;

(ii) un deuxième composant constitué par un copolymère à base d'éthylène comprenant de l'éthylène et une seconde partie constituée soit par du propylène soit par du butène-1; et

(iii) un troisième composant, différent du deuxième composant, qui fournit des propriétés d'un élastomère.

18. Structure de feuille à couches multiples comprenant:

a) une première couche (24) d'un matériau formant barrière, ayant deux surfaces opposées sur les côtés opposés de cette couche, la composition de cette première couche étant un copolymère de chlorure de vinylidène;

b) une deuxième couche (14) d'un polymère résistant aux chocs adhérant à l'une des surfaces de la première couche (24); et

c) une troisième couche (12) adhérant, dans ladite structure de la feuille, sur l'autre côté de la première couche (24), la composition de la troisième couche étant un mélange comprenant:

(i) 40 à 70% en poids d'un premier composant constitué par un polymère de polypropylène;

(ii) un deuxième composant constitué par un copolymère à base d'éthylène comprenant de l'éthylène et une seconde partie constituée soit par du propylène soit par du butène-1; et

(iii) un troisième composant, différent du deuxième composant, qui fournit des propriétés d'un élastomère.

19. Structure de feuille suivant la revendication 17 ou la revendication 18 caractérisée en ce que le deuxième composant est présent à raison de 5% à 35% en poids de la composition totale du mélange.

20. Structure de feuille suivant l'une quelconque des revendications 17 à 19 caractérisée en ce que le deuxième composant est constitué par un copolymère de 85 à 95% molaire d'éthylène et de 15 à 5% molaire de butène-1.

21. Structure de feuille suivant l'une quelconque des revendications 17 à 19 caractérisée en ce que le deuxième composant est constitué par un copolymère de 60 à 80% molaire d'éthylène et de 40 à 20% molaire de propylène.

22. Structure de feuille suivant l'une quelconque des revendications 17 à 21 caractérisée en ce que le troisième composant est présent à raison de 10 à 40% en poids de la composition totale du mélange.

23. Structure de feuille suivant l'une quelconque des revendications 17 à 22 caractérisée en ce que la composition du troisième composant est choisie parmi les copolymères à base d'éthylène, le polybutylène, le polyisobutylène, le terpolymère éthylène propylène diène-monomère, le copolymère bloc styrène butadiène styrène, le copolymère bloc styrène-éthylène/butylène-styrène, le copolymère bloc styrène isoprène styrène, le polybutène-1 et le copolymère isobutylène isoprène.

24. Emballage réalisé à partir d'une structure de feuille suivant l'une quelconque des revendications 10 à 23.

14
12

FIG. I

14
16
12

FIG. 2

22
20
18
12

FIG.3

1

14
24
12

# FIG. 4

28
28
30
28

# FIG.5